# FASCICULE DE BREVET EUROPEEN

(11) **EP 0 368 739 B1**
(45) Date de publication et mention de la délivrance du brevet: **17.02.1993**
(21) Numéro de dépôt: 89403050.1
(22) Date de dépôt: 07.11.1989
(51) Int. Cl.: E02D 5/80, G01C 15/04

(54) **Borne-support de point de repère polygonal ou autres applications**
Grenzstein mit Halterung für polygonalen Markierungspunkt oder andere Anwendungen
Boundary stone for supporting polygonal markers or for other applications

(30) Priorité: 08.11.1988 FR 8814589
(43) Date de publication de la demande: 16.05.1990
(73) Titulaire: BORNES ET BALISES SA, F-17290 Aigrefeuille d'Aunis (FR)
(72) Inventeur: Ballu, François-Xavier, F-17000 La Rochelle (FR)
(74) Mandataire: Casalonga, Axel

(56) Documents cités:
- FR-A- 2 244 159
- FR-A- 2 517 715
- FR-A- 2 605 346
- US-A- 3 688 454

## Description

L'invention concerne les bornes lourdes destinées notamment à servir de supports aux points de repère polygonaux.

Dans l'état actuel de la technique, ces bornes sont habituellement constituées par du béton coulé sur place, en scellant à leur partie supérieure un repère en bronze de forme habituellement hémisphérique avec un point de centre conique. Ce repère sert à l'adaptation précise d'un instrument de mesure géodésique, et les trois coordonnées du point représentatif sont notées avec précision. Il est donc indispensable, par la suite, que la borne ne puisse se déplacer dans le sens horizontal, ni non plus dans le sens vertical par enfoncement dans le sol, ce qui suppose précisément une fondation importante et lourde, exigeant une mise en oeuvre lente et onéreuse.

Le but de l'invention est de réaliser une telle borne d'une manière beaucoup plus rapide et économique, mais qui présente néanmoins la très grande stabilité nécessaire.

Pour cela, l'invention consiste à combiner une plaque intermédiaire de grande surface et de grande rigidité, avec des orifices permettant de la fixer solidement dans le sol au moyen d'un ou plusieurs piquets d'ancrage enfoncés dans le sol à travers ces orifices et comportant de préférence un ancrage latéral dans le sol s'opposant à tout arrachage, avec une tête de borne préfabriquée relativement légère en matériau moulé, venant s'adapter sur la plaque intermédiaire et s'y fixer par des moyens appropriés pour assurer son immobilisation.

En particulier, la plaque intermédiaire comporte au moins un orifice central, et le piquet d'ancrage central enfoncé dans cet orifice est de préférence du type décrit dans le brevet français 2.605.346 au nom de la demanderesse, et qui est formé par une partie tubulaire avec une tête évasée, une pointe ajourée et des tiges déformables repoussées verticalement dans le tube et se déformant en arc ou en hélicoïde par passage à travers la pointe lorsqu'elles sont repoussées à l'intérieur du tube.

La tête de borne présente, de préférence, également un trou central de fixation que l'on vient placer dans l'alignement avec le trou intérieur du piquet d'ancrage, la fixation étant assurée par un moyen purement mécanique a l'aide d'un dispositif dont l'extrémité inférieure est expansible au moyen d'un écrou conique, et dont l'extrémité supérieure comporte un écrou borgne en bronze constituant directement le repère par son extrémité supérieure.

D'autres particularités de l'invention apparaîtront dans la description qui va suivre d'un mode de réalisation et diverses variantes, pris comme exemples, et représentés sur le dessin annexé, sur lequel :
la figure 1 est une coupe axiale d'un premier mode de réalisation;
les figures 2 et 3 représentent des vues correspondantes de variantes de réalisation;
la figure 4 est une vue de dessus de la plaque intermédiaire; et
les figures 5 et 6 représentent des vues partielles, respectivement des deuxième et troisième variantes de réalisation en cours de fixation.

On voit sur les figures la plaque intermédiaire 1, qui est constituée de préférence par une plaque épaisse en acier galvanisé de forme carrée et de large surface, mais qui pourrait aussi bien être de n'importe quelle autre forme ou en n'importe quel matériau, pourvu qu'elle présente une bonne résistance et une assez large surface.

Cette plaque 1 comporte, de préférence, un orifice central 2 d'un diamètre approprié pour permettre l'introduction d'un piquet d'ancrage 3 de type connu, tel que par exemple celui décrit dans le brevet français susvisé. Ce piquet d'ancrage 3 est essentiellement constitué par un élément tubulaire muni d'une tête 4, d'une pointe 5 et de tiges intérieures 6 qui, par refoulement vertical à l'aide d'un mandrin, peuvent être déformées vers l'extérieur en passant à travers la pointe 5 pour s'ancrer dans le sol.

La plaque intermédiaire 1 est par conséquent disposée sur le sol ou dans le fond d'une fouille plus ou moins profonde pratiquée dans celui-ci, puis on introduit par le trou central 2 le piquet d'ancrage 3 que l'on enfonce d'abord dans le sol en frappant sur le piquet ou par l'intermédiaire d'un mandrin épaulé n'appuyant pas sur le sommet des tiges 6, après quoi on introduit un autre mandrin passant dans l'alésage cylindrique du piquet et venant en refouler les tiges pour assurer l'ancrage. Dès lors, la plaque 1 est solidement fixée dans le sol d'une manière parfaitement stable et peut à son tour servir de support pour la tête de borne 7 proprement dite, qui peut être une borne préfabriquée en matériau moulé, de préférence en polyester-béton, qui se fixe sur la plaque par tout moyen approprié.

Pour cela, la tête de borne 7 comporte de préférence un trou central 8 que l'on vient placer dans l'alignement avec l'alésage central du piquet 3. Cette opération est facilitée en prévoyant sur la plaque des moyens de centrage 9 coopérant avec la base de la borne pour assurer ce centrage. Dans l'exemple représenté, ces moyens de centrage 9 sont limités à deux courtes sections de cornières 9 soudées sur la plaque et recevant deux angles diamétralement opposés de la base de la borne 7. De la sorte, en posant simplement la borne entre ces cornières 9, on obtient automatiquement l'alignement du trou 8 avec l'alésage du tube 3.

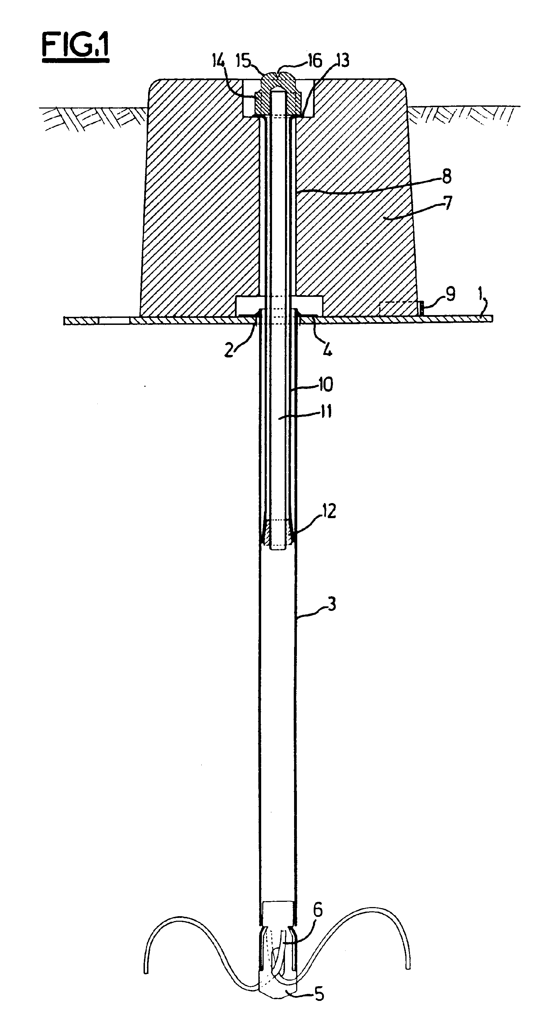

Pour assurer la fixation de la borne sur la plaque 1 ou dans le piquet central 3, on utilise de préférence un moyen mécanique expansible constitué, dans l'exemple représenté sur la figure 1, par un simple tube d'acier 10 traversé par une tige coaxiale 11 filetée au moins à ses extrémités. L'extrémité inférieure du tube 10 est fendue, tandis que l'extrémité inférieure de la tige 11 comporte un écrou conique 12, destiné à expanser cette partie fendue. A la partie supérieure, le tube 10 comporte une collerette 13 d'appui sur la borne à l'entour du trou 8, tandis que la tige 11 comporte un écrou 14 dont le vissage produit la traction de la tige 11 et par suite le déplacement du cône 12, lequel produit à son tour l'expansion de l'extrémité du tube 10 jusqu'à son blocage dans le piquet 3. En variante, naturellement, l'un des écrous 12 ou 14 pourrait être solidaire de la tige 11.

L'écrou 14 peut avantageusement être constitué par un écrou borgne en bronze dont l'extrémité supérieure est usinée en forme de calote sphérique 15 avec un centrage conique 16 pour servir directement de point de repère polygonal usuel. Ainsi, la rotation de l'écrou 14 suffit à assurer la fixation de la tête de borne 7 sur son intermédiaire 1 préalablement fixé, et du repère 15-16 sur cette borne.

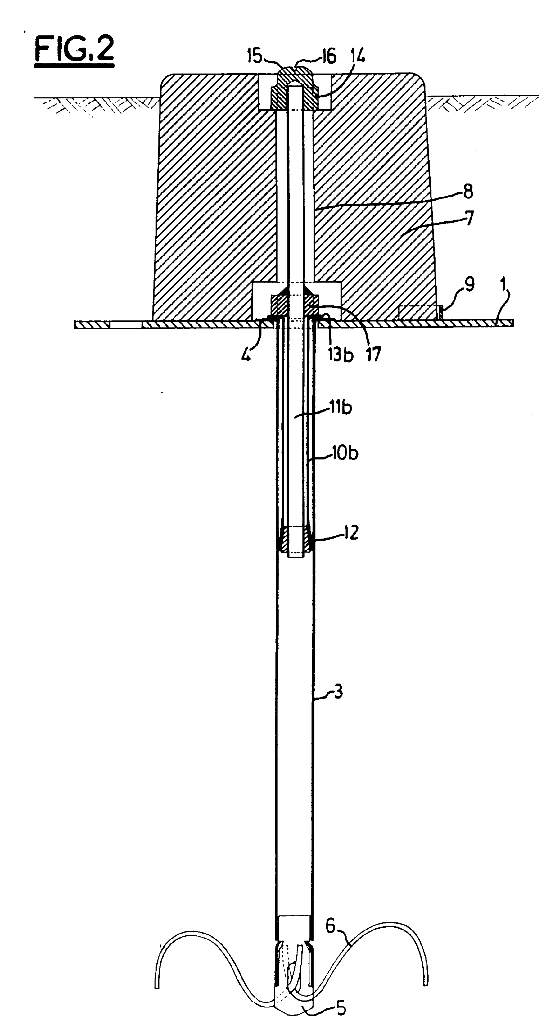

Dans la variante de réalisation de la figure 2, le tube de fixation 10b est analogue au tube 10 mais d'une longueur inférieure, et sa collerette 13b vient s'appuyer directement sur la tête 4 du piquet 3. En contrepartie, la tige 11b comporte une pièce médiane 17 de forme extérieure polygonale ou munie de plats pour permettre son entraînement en rotation, cette pièce étant fixée à la tige 11b, de préférence par soudure, l'intérieur de cette pièce 17 étant taraudé si la tige 11b est filetée d'un bout à l'autre, ou simplement lisse si cette tige est lisse dans sa partie médiane.

L'utilisation de cette deuxième variante se distingue de la précédente uniquement par le fait que le tube 10b et la tige 11B sont placés et fixés solidement dans le piquet 3 avant la mise en place de la tête de borne 7, cette dernière étant alors uniquement traversée par la partie supérieure de la tige 11b, et fixée uniquement par l'écrou 14, tel que décrit précédemment et se vissant sur l'extrémité supérieure filetée de cette tige 11b.

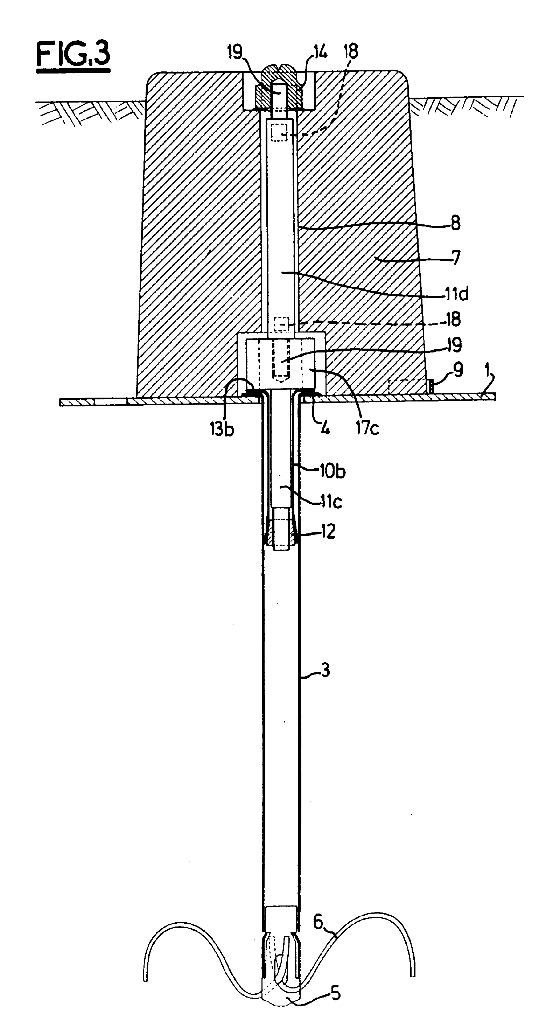

La troisième variante représentée sur la figure 3 est analogue à celle de la figure 2, excepté que la tige 11 est ici en deux parties, une partie inférieure 11c solidaire de la tête d'entraînement 17c et une partie supérieure 11d qui est amovible et qui vient se visser ultérieurement dans la pièce médiane 17c, avant la mise en place de la tête de borne 7 et sa fixation, qui a lieu comme précédemment. Pour faciliter ce vissage de la partie supérieure 11d dans la partie 17c, la partie amovible 11d comporte, de préférence, une forme polygonale ou des plats de serrage 18, et se termine de préférence par deux bouts filetés 19 identiques et deux séries de plats 18 identiques pour permettre son retournement. Cette dernière solution convient particulièrement pour des bornes 7 de grande hauteur, telles que des bornes de signalisation, routière ou autre, ou encore de hauteur variable, en ne modifiant dans ce cas que la longueur des parties supérieures 11d.

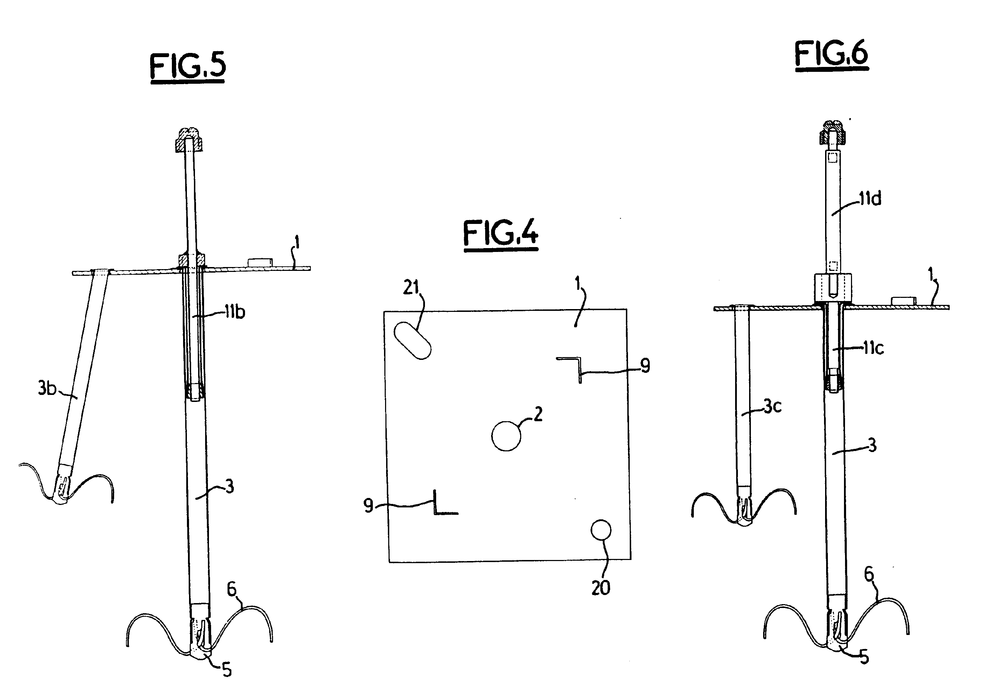

En plus de cette fixation centrale de la plaque et de la borne, la plaque 1 comporte de préférence d'autres orifices, de forme circulaire, tels que 20 ou oblongue, tels que 21, pour permettre de consolider la fixation de la plaque dans le sol au moyen d'autres piquets d'ancrage, verticaux, tels que 3b sur la figure 6 ou obliques, tels que 3c sur la figure 5. Le nombre de ces orifices et de ces piquets d'ancrage auxiliaires peut naturellement varier selon la nature du terrain, afin d'assurer dans tous les cas une parfaite stabilité. Sur les figures 5 et 6, les bornes correspondantes n'ont pas été représentées.

L'invention permet ainsi, avec des moyens simples et de mise en oeuvre rapide, d'assurer une mise en place parfaitement stable d'une borne servant de repère polygonal ou de toute autre borne lourde similaire, quelle que soit sa forme ou sa hauteur.

## Revendications

1. Borne de grande stabilité, en particulier pour servir de support à un point de repère polygonal, caractérisée par le fait qu'elle comporte, en combinaison :
- une plaque intermédiaire rigide (1) s'appuyant sur le sol naturel ou le sol au fond d'une fouille, cette plaque comportant au moins un orifice (2;20,21) pour permettre sa fixation stable dans le sol au moyen d'un ou plusieurs piquets d'ancrage (3;3b,3c) de type connu, et
- une tête de borne préfabriquée (7) en matériau moulé, destinée à venir se placer ultérieurement sur la plaque intermédiaire et s'y fixer par tout moyen approprié.

2. Borne selon la revendication 1, caractérisée par le fait que l'orifice ou l'un des orifices de fixation (2) est en position centrale, que le piquet d'ancrage central (3) coopérant avec cet orifice est de type tubulaire, que la borne comporte un trou central (8) destiné à venir dans l'alignement avec l'axe du piquet central tubulaire (3), et que la fixation ultérieure de la tête de borne (7) dans la plaque (1) a lieu par l'intermédiaire d'un dispositif mécanique à expansion introduit dans la borne et dans la partie supérieure du piquet d'ancrage central (3).

3. Borne selon la revendication 2, caractérisée par le fait que le dispositif expansible, à tube fendu (10) avec tige coaxiale (11) et écrou conique (12), est introduit en dernier dans la tête de borne (7) et le piquet (3), et est bloqué par serrage d'un écrou supérieur (14) qui assure simultanément l'expansion de l'extrémité fendue et la fixation de la tête de borne.

4. Borne selon la revendication 2, caractérisée par le fait que le dispositif expansible à tube fendu (10b) à tige coaxiale et à écrou conique (12) est mis en place avant le placement de la tête de borne (7) et serré par rotation d'une pièce médiane (17) solidaire de la tige axiale (11b) ou seulement de la partie inférieure (11c) de celle-ci, si celle-ci comporte une partie supérieure (11d) amovible, la mise en place et la fixation ultérieure de la tête de borne étant alors assurées par le serrage d'un écrou supérieur (14) se vissant sur l'extrémité supérieure de la tige axiale (11b) ou de la partie supérieure amovible (11d) de celle-ci.

5. Borne selon une des revendications 3 et 4, caractérisée par le fait que l'écrou supérieur de fixation (14) est un écrou borgne en bronze terminé à sa partie supérieure par une calote sphérique (15) et un point de centre (16) pour servir directement de repère polygonal usuel dont la fixation est assurée en même temps que la fixation de la tête de borne (7).

6. Borne selon une des revendications 2 à 5, caractérisée par le fait que la plaque intermédiaire (1) comporte des moyens (9) pour assurer le centrage de la tête de borne (7) dans une position telle que le trou central (8) de la borne soit à l'aplomb de l'orifice central (2) de la plaque.

7. Borne selon une des revendications 2 à 6, caractérisée par le fait qu'en plus de l'orifice central 2, la plaque 1 comporte un ou plusieurs autres orifices auxiliaires (20,21) de forme circulaire (20) ou oblongue (21) pour permettre la consolidation de la fixation de la plaque (1) sur le sol au moyen de piquets d'ancrage auxiliaires (3b,3c) enfoncés dans le sens vertical ou oblique.

## Patentansprüche

1. Grenzstein hoher Stabilität, insbesondere für die Verwendung als Halterung für einen polygonalen Markierungspunkt, dadurch gekennzeichnet, daß er in Kombination aufweist:
- eine starre Zwischenplatte (1), welche sich auf dem natürlichen Boden oder dem Boden auf dem Grund einer Grube abstützt, wobei diese Platte mindestens eine Öffnung (2; 20; 21) aufweist, um ihre stabile Befestigung in dem Boden mittels eines oder mehrerer Verankerungspfähle (3; 3b, 3c) bekannter Art zu ermöglichen, und
- einem vorgefertigten Grenzsteinkopf (7) aus Gußmaterial, welcher dazu bestimmt ist, schließlich auf der Zwischenplatte angeordnet und mit jeglichem geeigneten Mittel darauf befestigt zu werden.

2. Grenzstein nach Anspruch 1, dadurch gekennzeichnet, daß die Öffnung oder eine der Öffnungen (2) zur Befestigung sich in einer Mittenposition befindet, daß der mit dieser Öffnung zusammenwirkende zentrale Verankerungspfahl (3) rohrförmig ist daß der Grenzstein ein zentrales Loch (8) aufweist, welches dazu bestimmt ist, mit der Achse des rohrförmigen, zentralen Verankerungspfahles (3) in eine Flucht zu gelangen, und daß die schließlich erfolgende Befestigung des Grenzsteinkopfes (7) an Ort und Stelle in der Platte (1) mittels einer in den Grenzstein und den oberen Teil des zentralen Verankerungspfahles (3) eingeführten mechanischen Spreizvorrichtung erfolgt.

3. Grenzstein nach Anspruch 2, dadurch gekennzeichnet, daß die Spreizvorrichtung mit einem geschlitzten Rohr (10), einer Koaxialstange (11) und einer konischen Mutter (12) zuletzt in den Grenzsteinkopf (7) und den Pfahl (3) eingeführt und durch Festziehen einer oberen mutter (14) festgeklemmt wird, welche zugleich das Spreizen des geschlitzten Endes und die Befestigung des Grenzsteinkopfes sicherstellt.

4. Grenzstein nach Anspruch 2, dadurch gekennzeichnet, daß die Spreizvorrichtung mit geschlitztem Rohr (10b), Koaxialstange und konischer mutter (12) vor der Positionierung des Grenzsteinkopfes (7) eingesetzt und durch Drehung eines Mittelstückes (17) festgeklemmt wird, welches mit der Axialstange (11b) oder lediglich mit deren unterem Teil (11c), falls diese einen abnehmbaren oberen Teil (11d) besitzt, fest verbunden ist, wobei die Positionierung und die nachfolgende Befestigung des Grenzsteinkopfes dann durch das Festziehen einer oberen Mutter (14) sichergestellt wird, welche auf dem oberen Ende der Axialstange (11b) oder deren oberem, abnehmbarem Teil (11b) verschraubt wird.

5. Grenzstein nach einem der Ansprüche 3 und 4, dadurch gekennzeichnet, daß die obere Befestigungsmutter (14) eine Blindmutter aus Bronze ist, welche an ihrer Oberseite durch eine Kugelkalotte (15) und einen zentralen Punkt (16) abgeschlossen ist, um direkt als üblicher polygonaler Markierungspunkt zu dienen, dessen Befestigung gleichzeitig mit der Befestigung des Grenzsteins (7) erfolgt.

6. Grenzstein nach einem der Ansprüche 2 bis 5, dadurch gekennzeichnet, daß die Zwischenplatte (1) Mittel (9) aufweist, um die Zentrierung des Grenzsteinkopfes (7) in einer derartigen Position sicherzustellen, daß das zentrale Loch (8) des Grenzsteines senkrecht über der zentralen Öffnung (2) der Platte liegt.

7. Grenzstein nach einem der Ansprüche 2 bis 6, dadurch gekennzeichnet, daß die Platte (1) zusätzlich zu der zentralen Öffnung (2) eine oder mehrere andere Hilfsöffnungen (20, 21) von runder (20) oder länglicher (21) Form aufweist, um eine Sicherung der Befestigung der Platte (1) auf dem Boden mittels Hilfs-Ankerpfählen (3b, 3c) zu ermöglichen, welche in vertikaler oder schräger Richtung eingeschlagen werden.

## Claims

1. A marker with a high degree of stability, in particular serving to support a polygonal datum point, characterised in that it comprises, in combination:
- a rigid intermediate plate (1) bearing on the ground or the earth at the bottom of a pit, said plate comprising at least one orifice (2; 20, 21) enabling it to be secured in a stable manner in the ground by means of one or more anchoring posts (3; 3b, 3c) of known type, and
- a prefabricated marker head (7) of cast material, which is intended to be subsequently mounted on the intermediate plate and fastened thereto by any suitable means.

2. A marker according to claim 1, characterised in that the orifice or one of the securing orifices (2) is in a central position, that the central anchoring post (3) cooperating with said orifice is of tubular type, that the marker comprises a central hole (8) intended to be aligned with the axis of the central anchoring post (3), and in that the subsequent fastening of the marker head (7) in the plate (1) is effected by means of a mechanical expansion device introduced into the marker and into the upper part of the central anchoring post (3).

3. A marker according to claim 2, characterised in that the expansion device, having a slotted tube (10) with a coaxial stem (11) and a tapered nut (12), is introduced last into the marker head (7) and the post (3), is locked by tightening an upper nut (14) which simultaneously ensures the expansion of the slotted end and the fastening of the marker head.

4. A marker according to claim 2, characterised in that the expansion device, having a slotted tube (10b) with a coaxial rod and a tapered nut (12), is fitted before the marker head (7) is mounted and is tightened by rotating a central member (17) attached to the axial rod (11b) or only to the lower part (11c) thereof, if it comprises a detachable upper part (11d), the fitting and subsequent fastening of the marker head then being ensured by the tightening of an upper nut (14) screwed on to the upper end of the axial rod (11b) or the detachable upper part (11d) thereof.

5. A marker according to one of claims 3 and 4, characterised in that the upper fastening screw (14) is a bronze blind nut terminating at its upper part in a spherical dome (15) and a centre point (16) serving directly as a conventional polygonal datum point, the fastening of which is ensured simultaneously with the fastening of the marker head (7).

6. A marker according to any one of claims 2 to 5, characterised in that the intermediate plate (1) comprises means (9) for ensuring the centering of the marker head (7) in a position such that the central hole (8) of the marker is perpendicular to the central orifice (2) of the plate.

7. A marker according to any one of claims 2 to 6, characterised in that, in addition to the central orifice (2), the plate (1) comprises one or more further auxiliary orifices (20, 21) of circular shape (20) or oblong shape (21) so as to allow consolidation of the securing of the plate (1) in the ground by means of auxiliary anchoring posts (3b, 3c) driven in vertically or obliquely.
